(19) Europäisches Patentamt
European Patent Office
Office européen des brevets

(11) **EP 2 620 789 A2**

(12) **EUROPEAN PATENT APPLICATION**

(43) Date of publication:
**31.07.2013 Bulletin 2013/31**

(51) Int Cl.:
*G01V 1/38* (2006.01)

(21) Application number: **13152547.9**

(22) Date of filing: **24.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.01.2012  US 201261589990 P**

(71) Applicant: **CGGVeritas Services SA**
**91300 Massy (FR)**

(72) Inventors:
• **Siliqi, Risto**
  **91300 Massy (FR)**
• **Mensch, Thomas**
  **91300 Massy (FR)**
• **Grenie, Damien**
  **91300 massy (FR)**

(74) Representative: **Regimbeau**
**20, rue de Chazelles**
**75847 Paris Cedex 17 (FR)**

(54) **Multi-vessel seismic acquisition with undulating navigation lines**

(57)    Method for determining a seismic survey configuration of a multi-vessel acquisition system. The method includes a step of receiving (800) a number that corresponds to vessels to be used in the multi-vessel acquisition system (300); a step of receiving (802) a cross-line distance (350) between first and last straight line paths (322, 324) corresponding to first and last vessels (302, 304), respectively, of the multi-vessel acquisition system (300); a step of receiving (804) an inline distance (345) between the first and last vessels (302, 304); a step of selecting (806) shapes of undulating paths for the vessels of the multi-vessel acquisition system (300); a step of receiving (808) a desired azimuth and/or offset distribution of receivers towed by one or more streamer vessels of the multi-vessel acquisition system (300) relative to source vessels of the multi-vessel acquisition system (300); and a step of calculating (810) amplitudes ($A_i$), periods ($T_i$) and phases of the undulating paths.

Figure 3

EP 2 620 789 A2

## Description

### TECHNICAL FIELD

Embodiments of the subject matter disclosed herein generally relate to methods and systems for marine seismic data acquisition and, more particularly, to mechanisms and techniques for improved azimuth and/or offset distribution of marine seismic data acquisition.

### BACKGROUND

Marine seismic data acquisition and processing techniques are used to generate a profile (image) of a geophysical structure (subsurface) under the seafloor. This profile does not necessarily provide an accurate location for oil and gas reservoirs, but it may suggest, to those trained in the field, the presence or absence of oil and/or gas reservoirs. Thus, providing better image of the subsurface is an ongoing process.

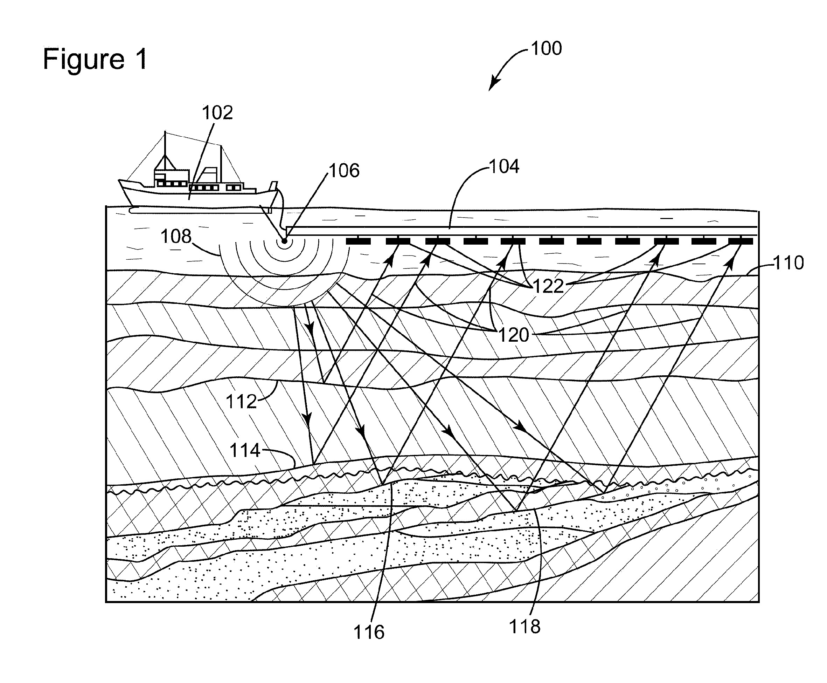

For a seismic gathering process, as shown in Figure 1, a marine seismic data acquisition system 100 includes a survey vessel 102 towing a plurality of streamers 104 (one shown) that may extend over kilometers behind the vessel. One or more source arrays 106 may be also towed by the survey vessel 102 or another survey vessel (not shown) for generating seismic waves 108. Conventionally, the source arrays 106 are placed in front of the streamers 104, considering a traveling direction of the survey vessel 102. The seismic waves 108 generated by the source arrays 106 propagate downward and penetrate the seafloor 110, eventually being reflected, by a reflecting structure 112, 114, 116, 118 at an interface between different layers of the subsurface, back to the surface. The reflected seismic waves 120 propagate upward and are detected by detectors 122 provided on the streamers 104. This process is generally referred to as "shooting" a particular seafloor 110 area.

One of the shortcomings of existing technology relates to the poor azimuth/offset distribution of the data collection points, i.e., detectors 122, positioned along streamers of equal length, and the number of streamers 104 attached to the survey vessel 102. Generally, a single survey vessel 102 tows approximately ten to sixteen streamers 104, of uniform length, with detectors 122 equally spaced along the length of each streamer. In this configuration, the azimuth of the collection points is narrow. Narrow azimuth distribution leads to problems associated with multiple (reflective) removal at locations on the streamers in close proximity to the source arrays 108. It should be noted that a survey vessel is limited in the number of streamers 104 it can tow, regardless of their length, i.e., adjusting the length of a portion of the streamers 104 to vary detector 122 density does not result in the ability to tow a greater number of streamers 104.

Another shortcoming associated with existing acquisition methods relates to the collected data in relation to its intended use, i.e., different streamer collection configurations lend themselves to different uses of the data, such as multiple removal, imaging and model building. Narrow azimuth distribution streamer configurations are not focused on a specific use of the collected data, resulting in less than optimal seismic image results.

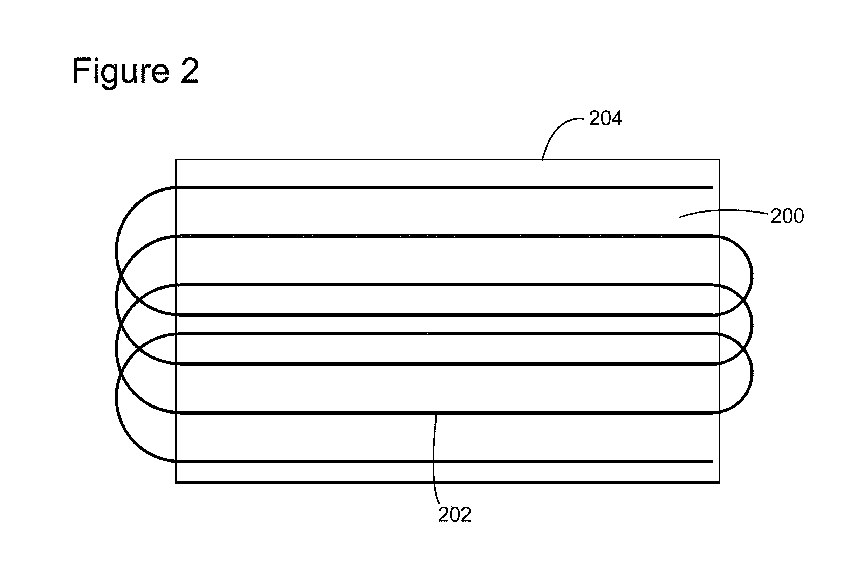

Given a certain area 200 that needs to be surveyed, as illustrated in Figure 2, multiple parallel adjacent straight sail lines 202 are followed by the vessel towing the streamers so that the ocean surface area 204 traversed overlays the subsurface area of interest. Using the methods of the prior art, the quality of seismic data acquired relies on the towing vessel operator's skill in accurately traversing the predefined parallel adjacent straight sail lines 202 and the ability to ensure that each streamer's orientation is maintained parallel to and in line with the linear sail lines. When towing multiple streamers, this is not an easy job.

Other methods for traversing the survey area 204 have been proposed. For example, U.S. Patent 4,486,863 (French) discloses a method in which a streamer towing vessel follows a circular path so that the streamers follow this circular path. Each of the circle paths is offset from the next one along an advancing line. The towing vessel completes a full circle and then leaves the completed circle to move on to the next circle path. However, because a streamer will only accept a finite amount of curvature, a large track distance ratio (i.e., a large ratio between the actual distance traversed by the vessel compared to the nominal sail-line distance) will be produced, which is an inefficient way to collect seismic data. In addition, this method increases the time taken to acquire the data, which results in an increase in the acquisition's cost.

Another method is disclosed in U.S. Patent No. 4,965,773. This method gathers and maps seismic data of a marine region by defining a spiral path using a point on the region as the origin of the spiral, and towing a transmitter/receiver streamer along the spiral path to gather seismic data. One embodiment discloses that the radial distance between the spiral turns is constant as given by an Archimedean spiral. This is also an inefficient way to collect seismic data, and the additional time taken to acquire the data equates to an increase in acquisition cost.

Still another acquisition method is disclosed in U.S. Patent Publication Number 2008/0285381, which describes towing a seismic spread including a single source and a plurality of streamers, with all the streamers being actively steered to maintain each streamer on a generally curved advancing path. The radius of the generally curved advancing path is described as being around 5,500-7,000 m, resulting in a curved path with a circumference of around 34,000-44,000 m. Given an average streamer length of around 6,000m, it can be seen that the length of each streamer covers only a small arc-length of the circular path being traversed. This acquisition method inherently has only a small amount of deviation from traditional linear 3D acquisition systems, with the added expense of having to actively steer a plurality of streamers to keep them from becoming entangled during acquisition.

Accordingly, it would be desirable to provide systems and methods that avoid the afore-described problems and drawbacks, and improve the azimuth/offset distribution of the collected seismic data.

## SUMMARY

According to an exemplary embodiment, there is a method for determining a seismic survey configuration of a multi-vessel acquisition system. The method includes a step of receiving a number that corresponds to vessels to be used in the multi-vessel acquisition system; a step of receiving a cross-line distance between first and last straight line paths corresponding to first and last vessels, respectively, of the multi-vessel acquisition system; a step of receiving an inline distance between the first and last vessels; a step of selecting shapes of undulating paths for the vessels of the multi-vessel acquisition system; a step of receiving a desired azimuth and/or offset distribution of receivers towed by one or more streamer vessels of the multi-vessel acquisition system relative to source vessels of the multi-vessel acquisition system; and a step of calculating amplitudes ($A_i$), periods ($T_i$) and phases of the undulating paths.

According to another exemplary embodiment, there is a computing device for determining a seismic survey configuration of a multi-vessel acquisition system. The computing device includes an interface for receiving a number that corresponds to vessels to be used in the muitl-vessel acquisition system, for receiving a cross-line distance between first and last straight line paths corresponding to first and last vessels, respectively, of the multi-vessel acquisition system; and for receiving an inline distance between the first and last vessels; and a processor connected to the interface. The processor is configured to select shapes of undulating paths for the vessels of the multi-vessel acquisition system, receive a desired azimuth and/or offset distribution of receivers towed by one or more streamer vessels of the multi-vessel acquisition system relative to source vessels of the multi-vessel acquisition system, and calculate amplitudes ($A_i$), periods ($T_i$) and phases of the undulating paths.

According to yet another exemplary embodiment, there is a method for determining a seismic survey configuration of a multi-vessel acquisition system. The method includes a step of receiving a bin size to be used in the multi-vessel acquisition system; a step of receiving a nominal fold for the bin size; a step of receiving a desired azimuth and/or offset distribution of receivers towed by one or more streamer vessels of the multi-vessel acquisition system relative to source vessels of the multi-vessel acquisition system; and a step of calculating lateral displacements between undulating paths to be followed by the one or more streamer vessels and the source vessels of the multi-vessel acquisition system.

According to another exemplary embodiment, there is a computing device for determining a seismic survey configuration of a multi-vessel acquisition system. The computing device includes an interface for receiving a bin size to be used in the multi-vessel acquisition system, for receiving a nominal fold for the bin size, and for receiving a desired azimuth and/or offset distribution of receivers towed by one or more streamer vessels of the multi-vessel acquisition system relative to source vessels of the multi-vessel acquisition system; and a processor connected to the interface and configured to calculate lateral displacements between undulating paths to be followed by the one or more streamer vessels and the source vessels of the multi-vessel acquisition system.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic illustration of a marine seismic data acquisition system;

Figure 2 is a schematic illustration of sail lines of a marine seismic data acquisition system;

Figure 3 is a schematic illustration of a novel marine seismic data acquisition system according to an exemplary embodiment;

Figure 4 is a schematic illustration of a curved streamer;

Figure 5 is a schematic illustration of a non-conventional source;

Figure 6 is a rose diagram illustrating azimuth and offset distribution for a traditional acquisition system;

Figure 7 is a rose diagram illustrating azimuth and offset distribution for a novel acquisition system according to an exemplary embodiment;

Figure 8 is a flowchart of a method for determining amplitudes and periods of undulating paths of vessels of a marine seismic data acquisition system according to an exemplary embodiment;

Figure 9 is a flowchart of a method for determining phases of undulating paths of vessels of a marine seismic data acquisition system according to an exemplary embodiment;

Figure 10 is a map illustrating undulating paths to be followed by source vessels according to an exemplary embodiment;

Figure 11 is a schematic illustration of a multi-vessel acquisition system using staggered vessels according to an exemplary embodiment; and

Figure 12 is a schematic illustration of a computing device to implement various methods described herein according to an exemplary embodiment.

## DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure of two streamer vessels and two source vessels. However, the embodiments to be discussed next are not limited to this configuration, but may be extended to other arrangements that include more or fewer streamer vessels and/or source vessels. Also, the figures show a particular order of the streamer and source vessels along a cross-line direction. This order is exemplary and not intended to limit the novel embodiments.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, both the streamer vessel and the source vessel follow curved paths. For example, the streamer vessel and the source vessel may follow periodic curved paths having amplitudes, periods and phases that may or may not be the same. The amplitudes, periods and phases may be optimized to obtain better azimuth and offset diversity for the recorded data. However, it is possible that only the streamer vessel follows the curved path and the source vessel follows a straight line path, or the other way around, as long as the azimuth and/or offset distribution of the collected seismic data is improved relative to the existing acquisition systems.

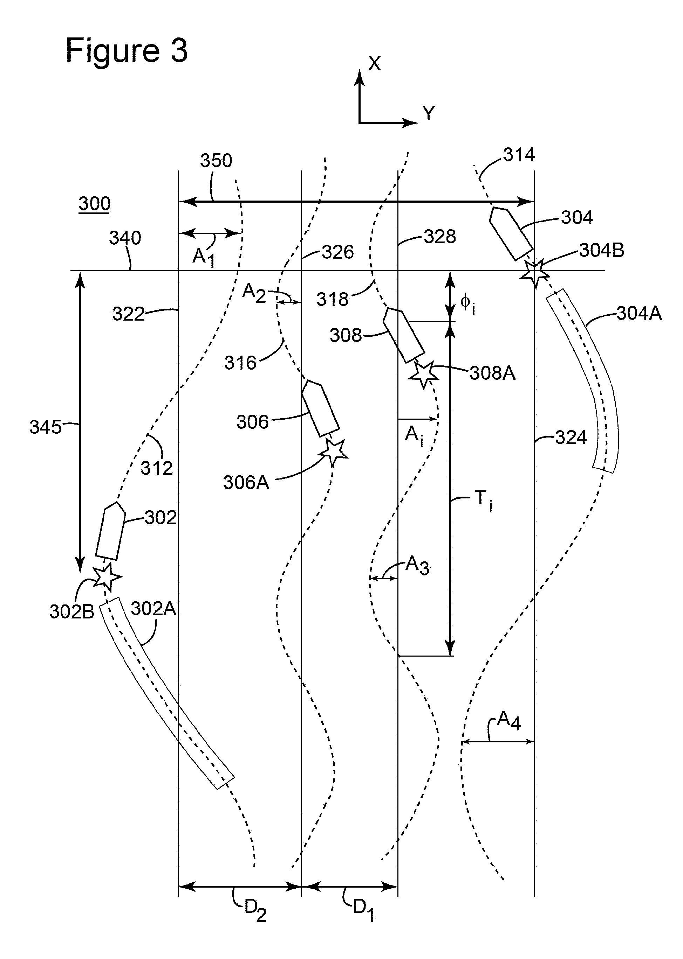

Such an example of a novel acquisition system is illustrated in Figure 3, in which the acquisition system 300 is shown to include two streamer vessels 302 and 304 and two source vessels 306 and 308. The streamer vessels 302 and 304 are towing corresponding streamer spreads 302A and 304A, respectively, and optionally, one or more seismic sources 302B and 304B, respectively. The source vessels 306 and 308 tow only corresponding seismic sources 306A and 308B.

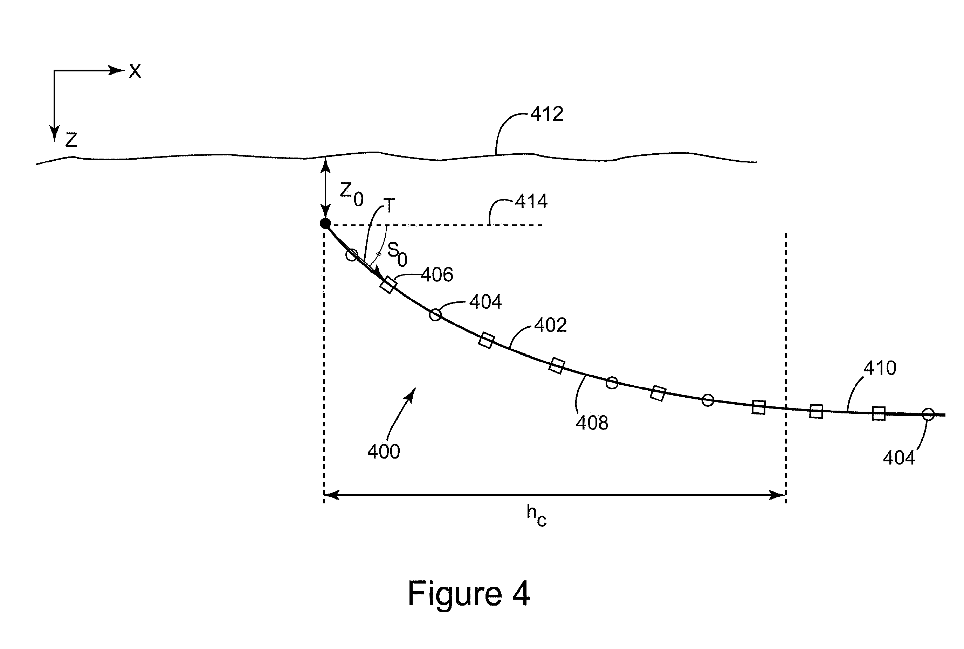

Regarding the streamers, it is conventional to tow them at the same depth below the water surface or slanted to the water surface. However, a more modern arrangement is described with reference to Figure 4, in which the curved streamer 400 includes a body 402 having a predetermined length, plural detectors 404 provided along the body, and plural birds 406 provided along the body for maintaining the selected curved profile. The streamer is configured to flow underwater when towed so that the plural detectors are distributed along the curved profile. The curved profile may be described by a parameterized curve, e.g., a curve described by (i) a depth $z_0$ of a first detector (measured from the water surface 412), (ii) a slope $s_0$ of a first portion T of the body with an axis 414 parallel with the water surface 412, and (iii) a predetermined horizontal distance $h_c$ between the first detector and an end of the curved profile. Note that the entire streamer does not need to have the curved profile. In other words, the curved profile should not be construed to always apply to the streamer's entire length. While this situation is possible, the curved profile may be applied to only a portion 408 of the streamer. In other words, the streamer may have (i) only a portion 408 with the curved profile or (ii) a portion 408 with the curved profile and a portion 410 with a flat profile, with the two portions attached to each other.

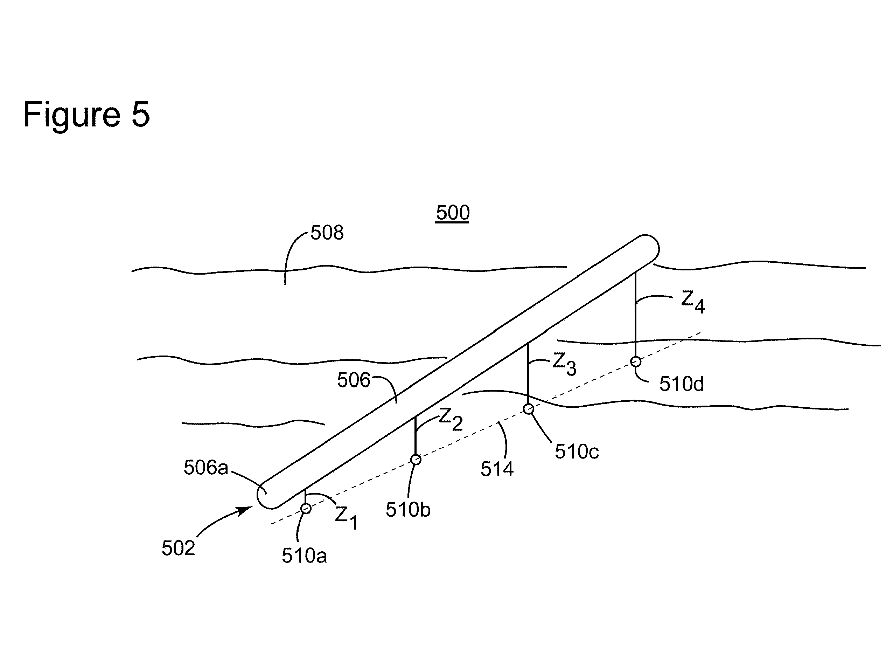

Regarding the sources, it is conventional to tow a source array that includes three sub-arrays. Each sub-array includes a float to which individual source elements are attached. Thus, all the individual source elements are located at a same depth. However, a more novel source array is presented in Figure 5. This source 500 includes one or more sub-arrays. Figure 5 shows a single sub-array 502 that has a float 506 configured to float at the water surface 508 or underwater at a predetermined depth. Plural source points 510a-d are suspended from the float 506 in a known manner. A first source point 510a may be suspended closest to the head 506a of the float 506, at a first depth z1. A second source point 510b may be suspended next, at a second depth z2, different from z1. A third source point 510c may be suspended next, at a third depth z3, different from z1 and z2, and so on. Figure 5 shows, for simplicity, only four source points 510a-d, but an actual implementation may have any desired number of source points. In one application, because the source points are distributed at different depths, they are not simultaneously activated. In other words, the source array is synchronized, i.e., a deeper source point is activated later in time (e.g., 2 ms for 3 m depth difference when the speed of sound in water is 1500 m/s) such that corresponding sound signals produced by the plural source points coalesce, and thus, the overall sound signal produced by the source array appears to be a single sound signal.

The depths z1 to z4 of the source points of the first sub-array 502 may obey various relationships. In one application, the depths of the source points increase from the head toward the tail of the float, i.e., z1 <z2<z3<z4. In another application, the depths of the source points decrease from the head to the tail of the float. In another application, the source points are slanted, i.e., provided on an imaginary line 514. In still another application, the line 514 is a straight line. In yet another application, the line 514 is a curved line, e.g., part of a parabola, circle, hyperbola, etc. In one application, the depth of the first source point for the sub-array 502 is about 5 m, and the greatest depth of the last source point is about 8 m. In a variation of this embodiment, the depth range is between 8.5 and 10.5 m or between 11 and 14 m. In another variation of this embodiment, when the line 514 is straight, the depths of the source points increase by 0.5 m from one source point to an adjacent source point. Those skilled in the art would recognize that these ranges are exemplary and these numbers may vary from survey to survey. A common feature of all these embodiments is that the source points have variable depths so that a single sub-array exhibits multiple-level source points.

Returning to Figure 3, each vessel is shown following an undulating path which is periodic in space, i.e., has a shape that repeats itself after a certain length (wavelength). An undulating path may include other curved profiles, for example, a path that is periodic in time, etc. In the embodiment of Figure 3, the streamer vessel 302 follows undulating path 312, streamer vessel 304 follows undulating path 314, source vessel 306 follows undulating path 316 and source vessel 308 follows undulating path 318. Not all the paths have to undulate. Some paths, as discussed later, may be straight lines. Paths 312, 314, 316 and 318 may have a periodicity, i.e., repeat themselves after a given time interval T (e.g., a period T). In one application, all the paths have the same period T. However, in another exemplary embodiment, each path has its own period $T_i$. In an exemplary embodiment, each path is a sinusoid.

Further, each path may have its own amplitude $A_i$. However, in one embodiment, all the amplitudes are equal. Still in another exemplary embodiment, the amplitudes are divided into subsets, and each subset has a same value. A subset may include any number of paths, from one to the maximum number of paths. The amplitude $A_i$ may be defined as the maximum deviation of the vessel from a straight line path. For example, for vessel 302, the maximum deviation from the straight line path 322 is shown as $A_1$. The amplitudes $A_2$ to $A_4$ of the remaining vessels are also illustrated in Figure 3. In another application, the distance between the maximum deviation of the vessel on one side of the straight line path and the maximum deviation on the other side is divided by two to generate the amplitude.

A third parameter that may be used to characterize the undulating paths 312, 314, 316 and 318 is the phase. The phase may be measured from a given cross-line reference 340 (extending along a Y axis) that is substantially perpendicular on the straight line paths 322, 324, 326 and 328. The phase represents the distance of a vessel to the reference 340. The phase may be represented as an angle if the undulating path is a sinusoid. A position of the vessel or the source measured along the straight line paths determine the phase $\varphi_i$ for each vessel. As with the amplitudes and periods, the phases may be different from vessel to vessel. In one embodiment, the phases must be different from vessel to vessel to achieve a better azimuth and/or offset distribution. In another application, the sources are shot in a staggered way, i.e., if the sources are shot simultaneously, a distance stag 345 (inline distance along inline axis X), between the first source 304B and the last source 302B along the straight line paths is maintained during the seismic survey.

A further parameter of the seismic survey system 300 is the cross-line offset 350, i.e., the distance between the first straight line path 322 and the last straight line path 324. For a given cross-line offset 350, the cross-line distance between adjacent straight line paths may vary from vessel to vessel. In one application, there is a minimum cross-line distance D1 between two adjacent straight line paths and a maximum cross-line distance D2 between another two adjacent straight line paths. Thus, all cross-line distances fall between D1 and D2. However, the cross-line distances may be the same in one application.

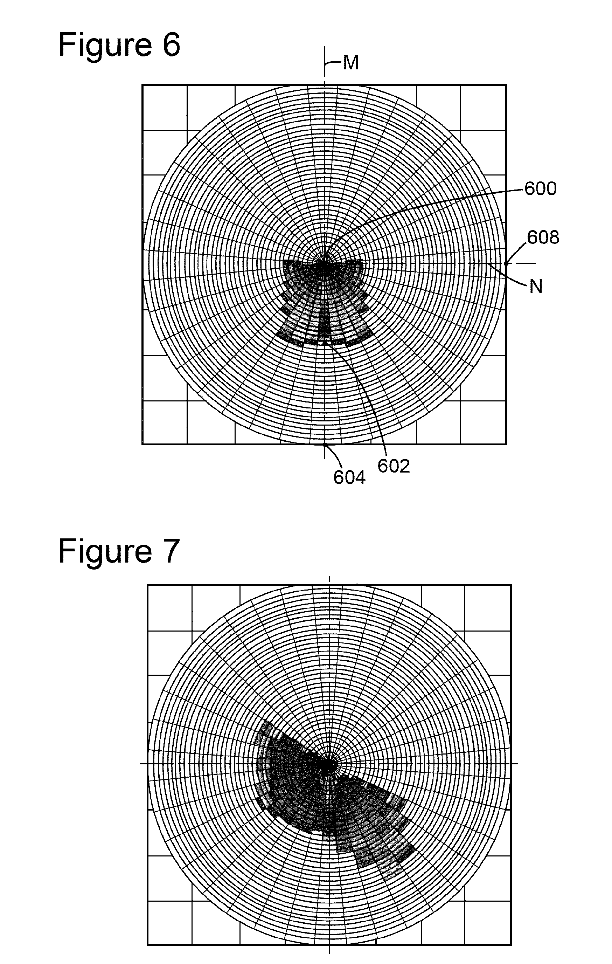

Figure 6 shows a rose plot for a traditional survey system having two streamer vessels and two source vessels that follow straight line paths similar to paths 322, 324, 326 and 328 shown in Figure 3. Figure 7 shows a rose plot for the novel survey system that uses the same number of source and streamer vessels, but the vessels follow undulating paths 312, 314, 316 and 318. The center 600 of the plot represents zero offset, i.e., no distance between the source and the recording receiver. A point 602 away from the center 600 of the plot indicates the position (offset) of the receiver relative to the source. If the receiver and the source have the same azimuth (i.e., the same angle relative to a traveling straight line direction), the two corresponding points 604 and 600, respectively, are plotted on a same line M. However, if the receiver makes, for example, an azimuth angle of 90 degrees, the receiver is plotted along line N, for example, at point 608. Thus, the distance along a radius in the plot of Figure 6 shows the offset and the relative angle of a point, e.g., 608, relative to a reference line M that passes through the center 600 of the plot to indicate the azimuth angle of the receiver relative to the source. Improvement in offset/azimuth distribution of Figure 7 is evident from comparing the two figures.

According to an exemplary embodiment, the novel survey system may use undulating paths that are sinusoids having the same amplitudes, the same periods, and different phases. However, it is possible to optimize these quantities (amplitude, period and phase or other quantities) based on the number of streamer vessels and source vessels to further improve the offset/azimuth distribution as discussed next. Note that various optimization methods may be implemented as discussed next.

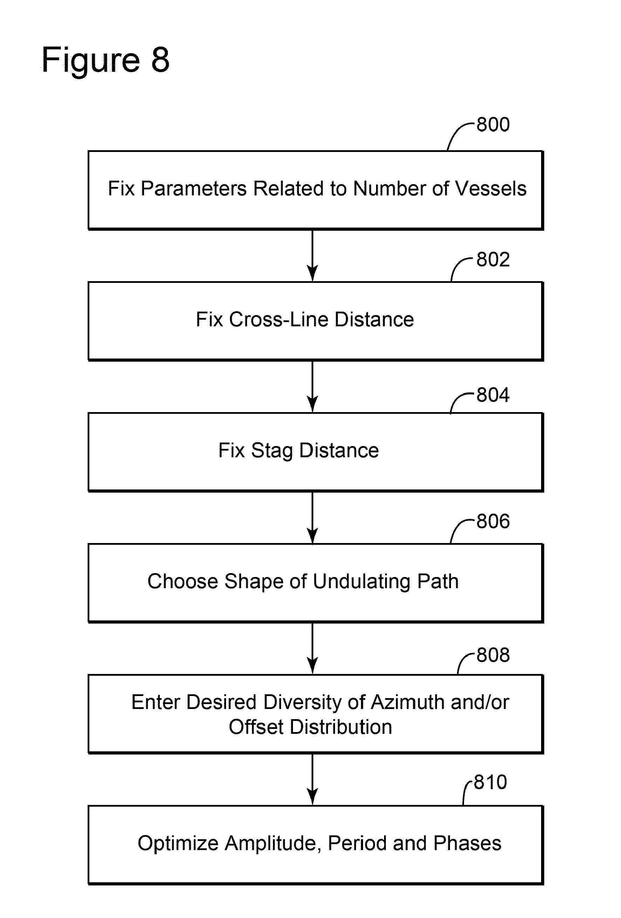

According to an exemplary embodiment illustrated in Figure 8, a method for optimizing a configuration of a multi-vessel seismic system is discussed. According to this exemplary embodiment, the quantities describing the multi-vessel seismic system are divided into two categories, parameters and variables. The parameters are assumed to be fixed at the beginning of the algorithm, while the values of the variables are generated by the algorithm based on the fixed parameters and one or more mathematical methods. The number of streamer vessels and the number of source vessels are fixed in step 800. For example, these numbers are 2 for the embodiment illustrated in Figure 3. As previously discussed, these numbers can vary from one to any appropriate number. The cross-line distance 350 may be fixed in step 802 (optionally, the minimum D1 and the maximum D2 distances between adjacent straight line paths are also fixed in this step) and the stag distance 345 may also be fixed in step 804. The cross-line distance 350 and the staggered distance 345 may be selected based on experience, an existing database, depth of target and/or cost of the survey. Optionally, the bin size of the survey may be fixed at the beginning of the calculation.

Having these parameters fixed, an undulating shape for the trajectories 312, 314, 316 and 318 is selected in step 806. The shape may be the same for all undulating paths or different. For simplicity, a sinusoidal shape is selected in step 806. Thus, the variables to be determined for the sinusoidal shape are the amplitude, period and the phase (e.g., distance between the vessels). In step 808, the operator may enter the desired azimuth and/or offset distribution. An example of azimuth and/or offset distribution was shown in Figure 7. For a given survey, the client or the operator may come up with any desired azimuth and/or offset distribution.

An optimization algorithm may be applied in step 810 for determining the amplitude and period and phase for the undulating paths of the streamer and source vessels. The optimization algorithm may be any known algorithm, e.g., a weighted least square method. An objective function may be defined based on the variables of the problem (amplitude and period), and the objective function is minimized or maximized taking into account the parameters introduced in steps 800 to 804, the shape of the undulating path, and the desired azimuth and/or offset distribution. The result of the optimization algorithm is the amplitudes, periods and phases of the vessels' trajectories. For simplicity, the flowchart in Figure 8 shows single amplitude, single period, and phases thus, suggesting that all the undulating paths are identical except for their phases. However, the algorithm may handle different amplitudes and periods for the different paths. Alternatively, the phases may be decided by the operator at the beginning of the optimization process or they may be calculated as discussed next.

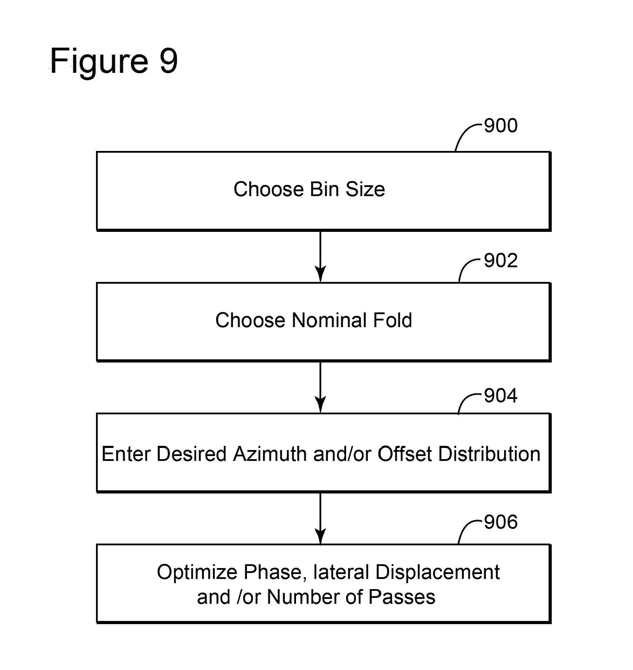

According to another exemplary embodiment, the phases for the undulating paths are calculated as illustrated in Figure 9. In step 900, a representative bin size for the desired azimuth and/or offset distribution is selected. Note that the steps illustrated in Figure 9 may be performed after the optimization algorithm of Figure 8 has been run and, thus, the output from Figure 8 may be used as input for the Figure 9 algorithm. Alternatively, the algorithm illustrated in Figure 9 may be run independent of the algorithm illustrated in Figure 8. Either way, it is considered that the amplitude and period for the undulating paths are known and fixed at this stage. The bin is defined as, for example, a square or rectangle having a length along the inline direction (X axis in Figure 3) and a length along the cross-line direction (Y axis in Figure 3). For example, a bin may be 1 km by 1 km. In step 902, a passing direction and a nominal fold for the bin size are selected. The passing direction refers, for example, to the straight line paths 322 to 328 in Figure 3. In another application, the passing direction may follow a hexagon. Other configurations are possible. The nominal fold is related to the signal-to-noise ratio, and it is a number, e.g., 100.

Then, in step 904, the desired azimuth and/or offset distributions are entered. Based on the information received in steps 900, 902 and 904, an optimization algorithm is performed in step 906. This optimization algorithm may be similar to that discussed in Figure 8, i.e., an objective or cost function is defined and minimized using one of a variety of mathematical algorithms to determine the phase, lateral displacement and/or number of passes. Lateral displacement is the cross-line distance between two adjacent straight line paths 322 to 328. The number of passes represents the number of times a vessel needs to move back and forth in a given area for achieving the seismic survey (see, for example, Figure 2). Figure 9 refers to a single phase and a single lateral displacement, but as already discussed, the algorithm may produce plural phases and plural lateral displacements, i.e., a phase and a lateral displacement for each vessel.

According to an exemplary embodiment, a more general optimization scheme is disclosed. In general, the problem of finding an optimal path with respect to several optimal criteria can be formulated as a multi-objective (or multi-criteria), nonlinear and constrained optimization problem; it consists of finding the vector of admissible variables **x** for a set of given parameters that represent the minimum of the objective function F(**x**). The optimization problem can be formulated as follows:

$$\min_{x \in S} \| F(\mathbf{x}) \|,$$

$$subject\ to\ \begin{cases} g_i(\mathbf{x}) \leq 0, & i = 1, \cdots m \\ h_i(\mathbf{x}) = 0, & i = 1, \cdots p \end{cases}$$

where $\|\cdot\|$ denotes any $L_p$ norm with common choices including $L_1$, $L_2$ and $L_\infty$, $\mathbf{x} = [x_1, x_2, .., x_n]$ is a vector of the $n$ variables, $S$ is the search space, the sets of functions $h_i(\mathbf{x})$ and $g_i(\mathbf{x})$ describe possible inequality and equality constraints, respectively, that need to be satisfied. For the case of a multi-objective optimization problem, the function $F(\mathbf{x})$ can be written as:

$$F(\mathbf{x}) = \{f_1(\pmb{x}), f_2(\pmb{x}), \ldots, f_p(\pmb{x})\},$$

where $f_i$ are individual objective functions.

In other words, this is a procedure looking for a compromise balance between the different objectives resulting in a configuration (called a Pareto optimal solution, which is defined as follows: given an initial allocation of goods among a set of individuals, a change to a different allocation that makes at least one individual better off without making any other individual worse off is called a Pareto improvement) out of an infinite number of alternatives. Optimization for a multi-objective problem is solved by using known mathematical methods. Depending on the topology/complexity (e.g. linear, uni-modal or multi-modal) of the cost function $F(\mathbf{x})$, various mathematical methods can be used, e.g., conjugate gradient, genetic algorithm, simulate annealing, etc.

For a multi-vessel seismic survey as in the present case, the optimization problem could be formulated as follows:

    a. Assuming known the following parameters:

        i. the number of source vessels,
        ii. the number of streamer vessels,
        iii. nominal bin size
        iv. other parameters (e.g., the size of the survey area, but also other quantities that are survey dependent)

    b. it is desired to find variables characterizing

        i. the trajectories of the different vessels (shape of the vessel paths), and
        ii. the spatial distributions of the paths over the survey area (X-line distance between vessels, staggered distances, etc.)
        iii. number of passes or other quantities that might be needed for a seismic survey,

    c. which optimize the seismic acquisition in terms of different objectives, including:

        i. time/cost of acquisition (number of passes)
        ii. coverage (azimuth/offset distribution) per bin
        iii. size of the nominal pattern (macro-bin)
        iv. uniformity of the macro-bin
        v. Spatial density of shot points
        vi. Spatial density of CMP
        vii. Spatial density of receivers
        viii. Or other quantities,

    d. Which have to satisfy a set of operational constraints, including:

        i. Navigation (minimum turning radius of the vessels, min/max vessel speed)
        ii. Safety (minimum allowed distance between vessels)
        iii. Or other constraints.

Vessels paths can be described by smooth curves. For instance, the generalized sine curve,

$$f(x) = A \sin((2\pi/T)x + \phi),$$

for which the parameters $A$, $T$, and $\phi$ are the amplitude, period, and phase (in radians), respectively, may describe one curve. More generally, periodic undulating vessel paths can be approximated by twice differentiable piecewise polynomial curves (e.g., B-splines). Arbitrary undulating paths, not only defined by amplitude, period and phase may also be used. Note also, as all non-holonomic vehicles, marine vessels have a minimum turning radius which has to be considered in the procedure (e.g., inserted in the optimization as an external constraint). Further, note that the algorithm described above may be modified for each seismic survey, and fewer or more parameters, variables and constraints may be imposed to optimize the paths of the vessels participating in the multi-vessel seismic survey. In one application, one or more variables may be fixed and moved to the parameters category, or one or more constraints (i.e., objectives) may be made variables or parameters, as the circumstances require.

A plurality of parameters may be used as constraints for the optimization algorithms used with regard to Figures 8 and 9. For example, in addition to those parameters already mentioned above, the following parameters may be also considered: the cost of the survey, the type of subsurface, the ocean currents, the velocity model, the length of the streamers, the number of streamers in a spread, the capability of steering the streamers (e.g., the presence of birds), the type of sensors used in the receivers, the type of survey (e.g., 3-dimensional (3D), 4D, etc.), etc.

Note that the algorithms illustrated in Figures 8 and 9 may be used to determine the undulating paths for at least three different situations: (i) for the streamer vessels and the source vessels, (ii) only for the source vessels, and (iii) only for the streamer vessels. For example, for the situation (ii), it is possible to decide a priori that the paths for the streamer vessels are straight lines, and then the algorithms determine the paths only for the source vessels. The same is true for situation (iii).

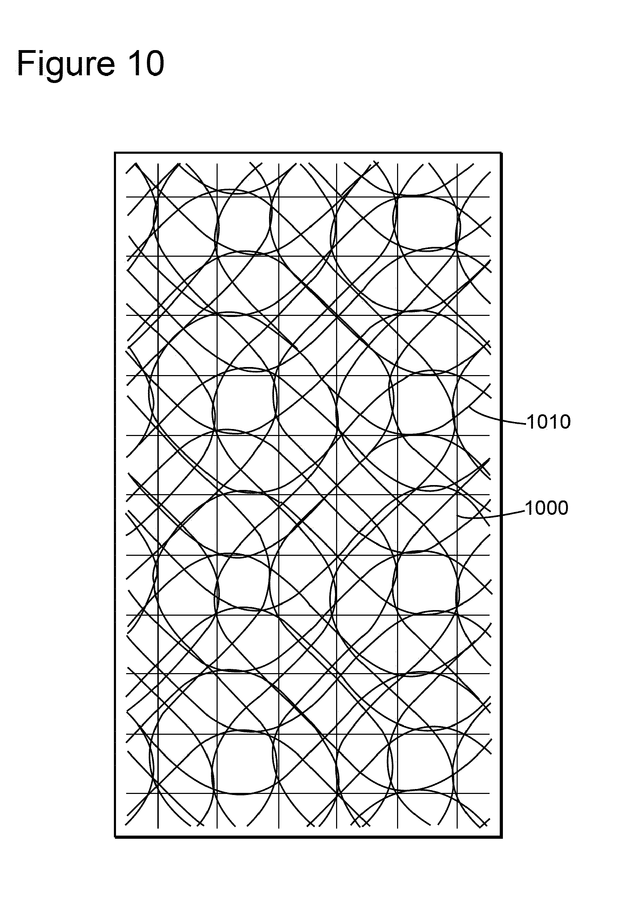

Based on the above algorithms (illustrated in Figures 8 and 9), the full map for streamer vessels and source vessels may be calculated. An example is shown in Figure 10 where, for simplicity, the streamer vessels were set to follow straight lines 1000 and the source vessels were set to follow periodic paths 1010 calculated based on the algorithms discussed above.

The sources illustrated in Figure 3 can be fired based on various schemes. One scheme in an exemplary embodiment can shoot the sources sequentially in a denser pattern. For example, fire the sources at given space intervals, i.e., shoot the source 304B, wait for this source to travel 12.5 meters along the inline direction X, then shoot source 308A, and so on. It should be noted in the exemplary embodiment that the value of 12.5 meters is an example and can vary, e.g., based on the speed of the streamer vessel. In this fashion, the sources are fired when, for example, they have the same X-axis, or inline, position during a firing sequence.

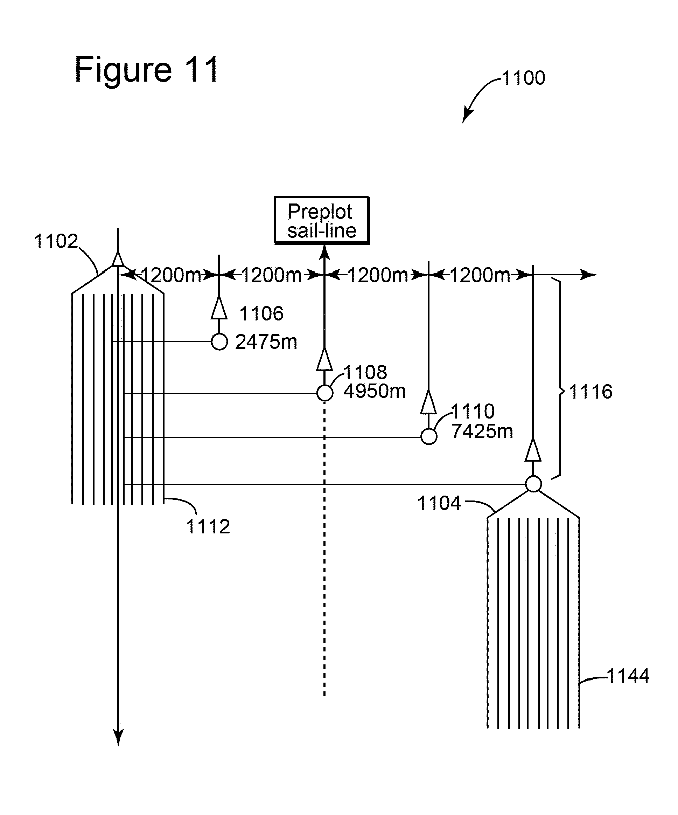

It should further be noted in the exemplary embodiment that a firing sequence includes the sequential one-time firing of each source. In another exemplary embodiment firing sequence, the sources are fired either simultaneously or almost simultaneously, with random time delays between firings. The seismic system 1100 of the exemplary embodiment of Figure 11 has two streamer vessels 1102, 1104 and three source vessels 1106, 1108 and 1110. It should be noted in the exemplary embodiment that the streamer vessels 1102, 1104 are configurable with respect to the number of streamers 1112, 1114 per vessel, the separation distance between streamer vessel 1102 and streamer vessel 1104 and the length of the streamers 1112, 1114. Further, it should be noted in the exemplary embodiment that the streamer vessels 1102, 1104 are separated cross-line by one or more source vessels 1106, 1108, 1110, and the leading edge of the streamer vessels 1102, 1104 are inline offset from each other by a configurable distance 1116. Further in the exemplary embodiment, the source vessels 1106, 1108, 1110 are inline offset from the streamer vessels 1102, 1104 and from each other by a configurable inline distance. Some numerical examples are listed in Figure 11.

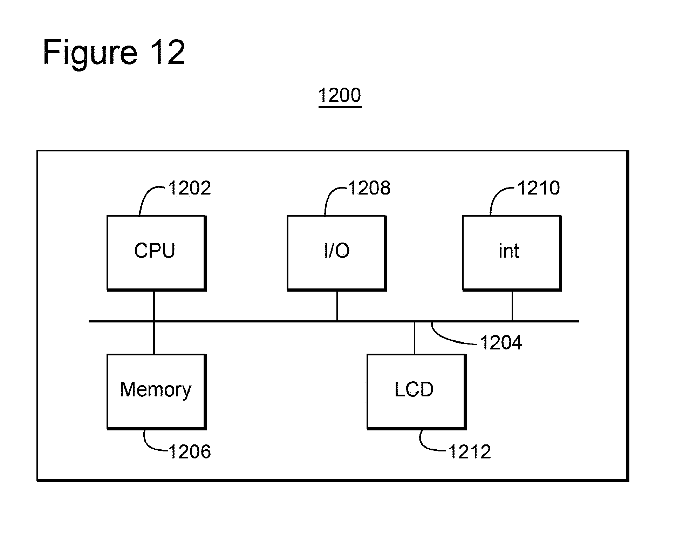

The methods and algorithms discussed above may be implemented in a computing device 1200 as illustrated in Figure 12. The computing device 1200 may be a processor, a computer, a server, etc. The computing device 1200 may include a processor 1202 connected through a bus 1204 to a storage device 1206. The storage device 1206 may be any type of memory and may store necessary commands and instructions associated with the algorithms discussed above. Also connected to the bus 1204 is an input/output interface 1208 through which the operator may interact with the algorithms illustrated in Figures 8 and 9. A communication interface 1210 is also connected to the bus 1204 and is configured to transfer information between the processor 1202 and an outside network, etc., Internet, operator's internal network, etc. The communication interface 1210 may be wired or wireless. Optionally, the computing device 1200 may include a screen 1212 for displaying various results generated by the algorithms discussed above. For example, the amplitudes, periods and phases of a planned survey may be displayed, after being calculated with the novel algorithms, on the screen 1212.

The above-disclosed exemplary embodiments provide a system and a method for improving an azimuth and/or offset distribution for a seismic survey by using undulating paths for the source vessels and/or the streamer vessels. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method for determining a seismic survey configuration of a multi-vessel acquisition system (300), the method comprising:

receiving (800) a number that corresponds to vessels to be used in the multi-vessel acquisition system (300);
receiving (802) a cross-line distance (350) between first and last straight line paths (322, 324) corresponding to first and last vessels (302, 304), respectively, of the multi-vessel acquisition system (300);
receiving (804) an inline distance (345) between the first and last vessels (302, 304);
selecting (806) shapes of undulating paths for the vessels of the multi-vessel acquisition system (300);
receiving (808) a desired azimuth and/or offset distribution of receivers towed by one or more streamer vessels of the multi-vessel acquisition system (300) relative to source vessels of the multi-vessel acquisition system (300); and
calculating (810) amplitudes ($A_i$), periods ($T_i$)

and phases of the undulating paths.

2. The method of Claim 1, wherein the shapes of the undulating paths are sinusoids.

3. The method of Claim 1, wherein the shapes of the undulating paths are identical and described by a sinusoid.

4. The method of Claim 3, wherein all the amplitudes are identical and all the periods are identical.

5. The method of Claim 1, wherein the step of calculating comprises:

applying an optimization algorithm to calculate the amplitudes, periods and phases.

6. The method of Claim 1, wherein the amplitudes and the periods are different from vessel to vessel.

7. The method of Claim 1, further comprising:

applying a Pareto improvement for determining the amplitudes, periods and phases.

8. The method of Claim 1, wherein each undulating path has a different phase.

9. The method of Claim 1, further comprising:

driving source vessels along undulating paths sandwiched between undulating paths of two streamer vessels.

10. The method of Claim 1, further comprising:

selecting straight line paths for streamer vessels.

11. The method of Claim 1, further comprising:

using the calculated amplitudes and periods to determine lateral displacements of the vessels; selecting a bin size for the seismic survey; selecting a nominal fold; and calculating the lateral displacements based on the amplitudes, periods, phases, bin size, and nominal fold.

12. The method of Claim 11, further comprising:

calculating a number of passes for the vessels to be performed during the seismic survey.

13. A computing device (1200) for determining a seismic survey configuration of a multi-vessel acquisition system (300), the computing device (1200) comprising:

an interface (1208) for receiving (800) a number that corresponds to vessels to be used in the multi-vessel acquisition system (300), for receiving (802) a cross-line distance (350) between first and last straight line paths (322, 324) corresponding to first and last vessels (302, 304), respectively, of the multi-vessel acquisition system (300); and for receiving (804) an inline distance (345) between the first and last vessels (302, 304); and
a processor (1202) connected to the interface (1208) and configured to,
select (806) shapes of undulating paths for the vessels of the multi-vessel acquisition system (300),
receive (808) a desired azimuth and/or offset distribution of receivers towed by one or more streamer vessels of the multi-vessel acquisition system (300) relative to source vessels of the multi-vessel acquisition system (300), and
calculate (810) amplitudes ($A_i$), periods ($T_i$) and phases of the undulating paths.

14. A method for determining a seismic survey configuration of a multi-vessel acquisition system (300), the method comprising:

receiving (900) a bin size to be used in the multi-vessel acquisition system (300);
receiving (902) a nominal fold for the bin size;
receiving (904) a desired azimuth and/or offset distribution of receivers towed by one or more streamer vessels of the multi-vessel acquisition system (300) relative to source vessels of the multi-vessel acquisition system (300); and
calculating (906) lateral displacements between undulating paths to be followed by the one or more streamer vessels and the source vessels of the multi-vessel acquisition system (300).

15. A computing device (1200) for determining a seismic survey configuration of a multi-vessel acquisition system (300), the computing device (1200) comprising:

an interface (1208) for receiving (900) a bin size to be used in the multi-vessel acquisition system (300), for receiving (902) a nominal fold for the bin size, and for receiving (904) a desired azimuth and/or offset distribution of receivers towed by one or more streamer vessels of the multi-vessel acquisition system (300) relative to source vessels of the multi-vessel acquisition system (300); and
a processor (1202) connected to the interface (1208) and configured to calculate (906) lateral

**EP 2 620 789 A2**

displacements between undulating paths to be followed by the one or more streamer vessels and the source vessels of the multi-vessel acquisition system (300).

## Figure 1

EP 2 620 789 A2

Figure 2

# Figure 3

Figure 4

EP 2 620 789 A2

EP 2 620 789 A2

# Figure 5

Figure 6

M

600

608

N

604  602

Figure 7

# Figure 8

```
                                                    ┌─800
        ┌──────────────────────────────────────────────────┐
        │   Fix Parameters Related to Number of Vessels     │
        └──────────────────────────────────────────────────┘
                              │
                              ▼                     ┌─802
        ┌──────────────────────────────────────────────────┐
        │             Fix Cross-Line Distance               │
        └──────────────────────────────────────────────────┘
                              │
                              ▼                     ┌─804
        ┌──────────────────────────────────────────────────┐
        │                Fix Stag Distance                  │
        └──────────────────────────────────────────────────┘
                              │
                              ▼                     ┌─806
        ┌──────────────────────────────────────────────────┐
        │          Choose Shape of Undulating Path          │
        └──────────────────────────────────────────────────┘
                              │
                              ▼                     ┌─808
        ┌──────────────────────────────────────────────────┐
        │   Enter Desired Diversity of Azimuth and/or       │
        │              Offset Distribution                  │
        └──────────────────────────────────────────────────┘
                              │
                              ▼                     ┌─810
        ┌──────────────────────────────────────────────────┐
        │       Optimize Amplitude, Period and Phases       │
        └──────────────────────────────────────────────────┘
```

# Figure 9

900

```
┌─────────────────────────────────────────┐
│            Choose Bin Size               │
└─────────────────────────────────────────┘
```

902

```
┌─────────────────────────────────────────┐
│          Choose Nominal Fold             │
└─────────────────────────────────────────┘
```

904

```
┌─────────────────────────────────────────┐
│  Enter Desired Azimuth and/or Offset Distribution  │
└─────────────────────────────────────────┘
```

906

```
┌─────────────────────────────────────────┐
│     Optimize Phase, lateral Displacement  │
│         and /or Number of Passes          │
└─────────────────────────────────────────┘
```

# Figure 10

# Figure 11

1100

# Figure 12

1200

**EP 2 620 789 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4486863 A
- US 4965773 A
- US 20080285381 A